# EUROPEAN PATENT APPLICATION

(11) **EP 2 979 569 A1**
(43) Date of publication of application: **03.02.2016**
(21) Application number: 14772922.2
(22) Date of filing: 17.03.2014
(51) Int. Cl.: A44B 18/00

(54) **SHEET HAVING TILTED STEMS ON BOTH SURFACES THEREOF AND SEAT USING SAME**

(30) Priority: 27.03.2013 JP 2013066580; 27.03.2013 JP 2013066581
(71) Applicant: Kuraray Fastening Co., Ltd., Osaka-shi, Osaka 530-8611 (JP)
(72) Inventor: ONO, Satoru, FUKUI 910-0273 (JP); HIGASHINAKA, Yukitoshi, FUKUI 910-0273 (JP); TANOKURA, Tooru, Osaka-shi, Osaka 530-8611 (JP)
(74) Representative: Müller-Boré & Partner Patentanwälte PartG mbB
(86) International application number: PCT/JP2014/001518
(87) International publication number: WO 2014/156048

(57) **Abstract**

The present invention relates to a sheet provided with tilted stem groups (1) and (4) present on the front surface of a base layer (2), and tilted stem groups (2) and (5) present on the back surface of the base layer (2). Tilted stems (3) present both in the tilted stem groups (1) and (4), and in the tilted stem groups (2) and (5) are such that: multitudes of the tilted stems (3) are formed close together, the tilted stems (3) protrude in a direction tilted with respect to a vertical direction, the tilted stems (3) protrude in one direction from the surface of the base layer (2), and the tilted stems (3) are tilted in directions symmetrical across the base layer (2).

## Description

### TECHNICAL FIELD

The present invention relates to a sheet suitable for fixing a cover sheet made of a material such as fabric or leather to the outer surface of a cushion member constituting an automobile seat or an office chair, and to a seat configured such that a cover sheet is fixed to the outer surface of a cushion member by the sheet.

### BACKGROUND ART

Generally, a seat or a chair for automobiles or for office use is configured such that the outer surface of a cushion made of foamed polyurethane is covered with an outer cover member made of fabric or leather as a cover sheet, and the cover sheet is fixed to the outer surface of a cushion member.

In recent years, as a method for fixing a cover sheet to the outer surface of a cushion member, there is proposed a so-called mold-in process i.e. a method in which an engagement member having multitudes of engagement elements (normally, male engagement elements) on the front surface thereof, and having multitudes of embedded elements on the back surface thereof, namely, a male surface fastener, is placed at a predetermined position in a die in such a manner that the engagement element surface of the surface fastener comes into contact with the inner wall of the die, and a molding resin liquid (normally, a foamable polyurethane liquid) is injected into the die to foam so that the embedded elements on the surface fastener are integrally formed with the cushion surface, and the engagement elements are exposed from the outer surface of the cushion member.

There is employed a method for fixing the cover sheet covered on the outer surface of the cushion member to the outer surface of the cushion member by attaching a female surface fastener including engaged elements (normally, loop-like engagement elements) engageable with the engagement elements of the male surface fastener to the back surface of the cover sheet, and by engaging the male engagement elements attached to the outer surface of the cushion member with the female engagement elements attached to the back surface of the cover sheet.

In the aforementioned mold-in process, in order to keep a foamable resin liquid from flowing to the portion of the male surface fastener where the male engagement elements are to be formed in molding, the male surface fastener is placed in advance in a groove portion formed in a die for a cushion member in such a manner that the engagement element surface is hidden, the foamable resin liquid is injected into the die, the foamable resin liquid is foamed and cured in a predetermined condition, the back surface (embedded element surface) of the surface fastener is embedded in a cushion member, the male surface fastener is firmly adhered to the cushion member, and then, the cushion member is taken out of the die. Thus, the cushion member in a state that the engagement element surface of the surface fastener is exposed is obtained.

However, when the foamable resin liquid is injected into the die in a state that the surface fastener is placed in the die, the foamable resin liquid may intrude through a clearance between the surface fastener and the groove portion of the die for some reason. Intrusion of foamable resin liquid to the portion of the surface fastener where the male engagement elements are to be formed may result in covering the male engagement element surface of the surface fastener with foamed resin. This may make it difficult to sufficiently expose the male engagement elements, and the engagement force may be insufficient. Thus, a defective cushion member may be obtained.

In the case of a currently known surface fastener for a mold-in process, once a foamable resin liquid flows to the male engagement element portion, it is not easy to remove the resin in a simplified manner. It is necessary to remove the resin by a brush or a like tool with use of an organic solvent such as dichloromethane. If the amount of overflowing resin is too large to remove, it is necessary to discard the surface fastener. This leads to an increase in the cost relating to removal and discarding, and also leads to an increase in workload by removal or additional manufacturing, and an increase in manufacturing time.

Various methods are proposed as a method for preventing intrusion of foamable resin liquid to a male engagement element surface in carrying out the mold-in process. For instance, there is known a method, in which an engagement element surface is covered with a film before a mold-in process is carried out, and the film is peeled off and removed from the engagement element surface after molding (see Patent Literature 1). When this method is carried out, however, film waste of a huge amount may be generated. Further, it is necessary to perform an additional operation such as covering the engagement element surface with a film in advance, or removing the film after molding. This may seriously lower the work efficiency. Furthermore, it is difficult to completely remove the film that has covered the engagement element surface. It is often the case that a part of the film covers the engagement element surface after all, and a sufficient engagement force may not be obtained.

Further, in order to bring an engagement element surface into firm contact with the bottom portion of a die, there is proposed a method, in which resin containing magnetic powders is coated on a male surface fastener, while a magnet is embedded in the bottom portion of a die, and the engagement element surface is brought into firm contact with the bottom portion of the die by the magnetic force of the magnet (see Patent Literature 2). Even with use of this method, it is impossible to completely prevent intrusion of resin liquid to the engagement element surface. Further, it is necessary to perform an operation of coating the resin containing magnetic powders to.the surface fastener. Therefore, this may not be an excellent method in the point of work efficiency and in the point of cost.

Further, in the case of the mold-in process, normally, two or more male surface fasteners are attached to one cushion member. Therefore, it is necessary to place the male surface fasteners in advance at a predetermined position in a die. This operation may extend the cycle of molding a cushion member, and may seriously lower the work efficiency.

In view of the above, an object of the present invention is to solve the aforementioned drawbacks of the conventional art relating to the mold-in process, specifically, to provide a unique technique for fixing a cover sheet to the outer surface of a cushion member, without using a mold-in process. The invention is advantageous in eliminating all the aforementioned drawbacks of the conventional mold-in process.

### CITATION LIST

### PATENT LITERATURE

Patent Literature 1: Japanese Unexamined Patent Publication No. S60-179003 (claims)
Patent Literature 2: Japanese Unexamined Utility Model Publication No. H6-64825 (claims)

### SUMMARY OF INVENTION

Specifically, a sheet according to an aspect of the present invention is a sheet provided with a tilted stem group (1) present on the front surface of a base layer and a tilted stem group (2) present on the back surface of the base layer. Tilted stems present both in the tilted stem group (1) and in the tilted stem group (2) are such that:
multitudes of the tilted stems are formed close together;
the tilted stems protrude in a direction tilted with respect to a vertical direction;
the tilted stems protrude in one direction from the surface of the base layer; and
the tilted stems are tilted in directions symmetrical across the base layer.

Another aspect of the invention is directed to a seat for a vehicle configured such that a seat cushion member is covered with a cover sheet, wherein the cover sheet is fixed with use of the tilted stem sheet.

### BRIEF DESCRIPTION OF DRAWINGS

FIG. 1 is a sectional view of an example of a double-sided tilted stem sheet embodying the present invention, illustrating a plane in parallel to the tilted direction of tilted stems;
FIG. 2 is a perspective view of an example of the double-sided tilted stem sheet embodying the present invention;
FIG. 3 is a sectional view of a portion of a cushion member where a cover sheet is fixed, using a double-sided tilted stem sheet in a first embodiment of the present invention;
FIG. 4 is a sectional view of an example of a tilted stem sheet in a second embodiment of the present invention, illustrating a plane in parallel to the tilted direction of tilted stems;
FIG. 5 is a sectional view of an example of a double-sided tilted stem sheet in the second embodiment of the present invention, illustrating a plane in parallel to the tilted direction of tilted stems;
FIG. 6 is a sectional view of an example of the tilted stem sheet in the second embodiment of the present invention, illustrating a plane in parallel to the tilted direction of tilted stems when male engagement elements are present on the back surface of the tilted stem sheet;
FIG. 7 is a sectional view of an example of the double-sided tilted stem sheet in the second embodiment of the present invention, illustrating a plane in parallel to the tilted direction of tilted stems when male engagement elements and tilted stems are present on the back surface of the double-sided tilted stem sheet;
FIG. 8 is a perspective view of an example of the double-sided tilted stem sheet in the second embodiment of the present invention, illustrating a portion surrounded by the dotted line in FIG. 5;
FIG. 9 is a sectional view of an example, in which a cover sheet is fixed to a seat cushion member with use of an example of the tilted stem sheet in the second embodiment of the present invention;
FIG. 10 is a sectional view of an example, in which a cover sheet is fixed to a seat cushion member with use of an example of the double-sided tilted stem sheet in the second embodiment of the present invention; and
FIG. 11 is a sectional view of an example, in which a cover sheet is fixed to a seat cushion member with use of another example of the tilted stem sheet in the second embodiment of the present invention (an example in which male engagement elements are formed on the back surface).

### DESCRIPTION OF EMBODIMENTS

In the following, embodiments for carrying out the present invention will be described in detail. The present invention, however, is not limited to the embodiments.

A sheet in an embodiment is a sheet configured such that a tilted stem group (1) is present on the front surface of a base layer, and a tilted stem group (2) is present on the back surface of the base layer, wherein both of tilted stems present in the tilted stem group (1) and in the tilted step group (2) are such that:
(A) multitudes of the tilted stems are formed close together;
(B) the tilted stems protrude in a direction tilted with respect to a vertical direction;
(C) the tilted stems protrude in one direction from the surface of the base layer; and
(D) the tilted stems are tilted in directions symmetrical across the base layer.

When the requirement (A) and/or the requirement (C) is not satisfied, specifically, when the tilted stems present in each of the tilted stem groups are not tilted in one direction, but are tilted in directions different from each other, the force of fixing a cover sheet to a cushion member may be seriously lowered. Further, when the requirement (B) is not satisfied, the force of fixing a cover sheet to a cushion member may be seriously lowered. When the requirement (D) is not satisfied, specifically, when the tilted stems present on the front surface and the tilted stems present on the back surface are not tilted in directions symmetrical across the base layer, although it is possible to firmly fix the tilted stems present on one of the surfaces to a cushion member, the tilted stems present on the other surface hardly resist against the pulling force, and consequently, a double-sided tilted stem sheet is likely to be pulled out of the cushion member.

As a first embodiment, a tilted stem sheet of the present invention may be such that a base layer is constituted of one layer or may be obtained by attaching two sheets, each of which has tilted stems only on one surface thereof in a state that base layers of the respective sheets are attached to each other. In the aforementioned configuration, it is not necessary to attach the entire surfaces of the base layers to each other. The base layers may be partially attached to each other, or may be placed one over the other. The base layers may be attached to each other by an adhesive or a tackifier, or may be attached to each other by melting, or may be attached to each other by stapling or stitching.

Further, as a second embodiment of the present invention, it is possible to form a double-sided tilted stem sheet by folding a sheet, in which a tilted stem group (1) is present on one side on the front surface of a base member with respect to a middle portion of the base member, and a tilted stem group (2) is present on the other side on the front surface of the base member along the middle portion of the base member.

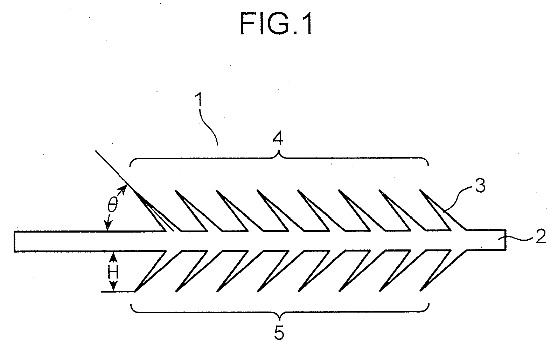

FIG. 1 is a sectional view of a double-sided tilted stem sheet that satisfies the aforementioned requirements (A) to (D). Specifically, it is clear that tilted stems present in a group 4 and tilted stems present in a group 5 in FIG. 1 are respectively tilted in a certain direction with respect to a vertical direction. The tilted stems present in the group 4 in FIG. 1 are tilted in the left direction, and the tilted stems present in the group 5 in FIG. 1 are also tilted in the left direction. Further, it is also understood that the tilted stems present in the group 4 and the tilted stems present in the group 5 in FIG. 1 are tilted in directions symmetrical across a base layer 2, in other words, tilted in the left direction.

In any one of the embodiments, the requirements such that "tilted stems protrude in a direction tilted with respect to a vertical direction", "tilted stems present in each of the regions are tilted in one direction, and "tilted stems are tilted in directions symmetrical across the base layer" include a case that some of the tilted stems do not satisfy the aforementioned requirements, if the number of such stems is very small. It is needless to say, however, that a configuration such that all the tilted stems satisfy the aforementioned requirements is a most preferred embodiment.

In any one of the embodiments, a unique double-sided tilted stem sheet having the aforementioned configuration is attached to the back surface of a cover sheet, and the double-sided tilted stem sheet is inserted into a narrow groove portion formed in the outer surface of a cushion member to such an extent that the tilted stems of the double-sided tilted stem sheet are stuck into or abutted against the inner wall surface of the groove portion of the cushion member. According to this configuration, the tilted stems of the double-sided tilted stem sheet are tilted in a direction of resisting against the pulling force when the double-sided tilted stem sheet is attempted to be pulled out of the groove portion. Therefore, the tilted stems act like a "barb" on a fishing hook, and resist against the pulling force. Thus, it is possible to prevent pulling out of the double-sided tilted stem sheet from the groove portion of the cushion member.

There is no need of fixing a male surface fastener in advance at a predetermined position in a molding die, as is required in the conventional art. Therefore, it is not necessary to provide prevention against a case such that the outer surface of the male surface fastener may be covered with a resin liquid for forming a cushion member in forming the cushion member. Further, there is no need of providing a countermeasure against covering the outer surface of the male surface fastener with a resin liquid for forming a cushion member. Thus, it is possible to remarkably increase the speed of forming a cushion member. This is advantageous in enhancing the productivity.

### (First Embodiment)

In the following, the first embodiment of the present invention is described in detail using FIG. 1 to FIG. 3.

A sheet in the first embodiment has a feature that a base layer of the sheet is constituted of one layer.

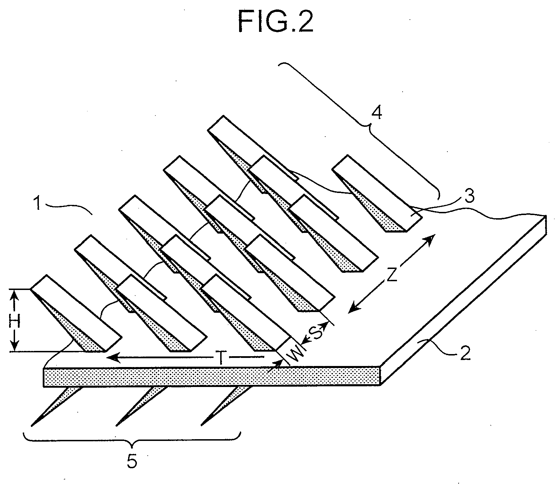

The double-sided tilted stem sheet in the embodiment is provided with a base layer (indicated by the reference sign 2 in FIG. 1 and FIG. 2), and is configured such that a tilted stem group (1) (indicated by the reference sign 4 in FIG. 1 and FIG. 2) is present on the front surface of the base layer, and a tilted step group (2) (indicated by the reference sign 5 in FIG. 1 and FIG. 2) is present on the back surface of the base layer. Preferably, these members may be made of one kind of resin in the points of manufacturing and peeling resistance of stems.

The width of the base layer is preferably from 10 to 60 mm, more preferably from 15 to 40 mm, and furthermore preferably from 20 to 30 mm in the tilted direction (T direction illustrated in FIG. 2) of tilted stems. An excessively large width of the base layer may make it difficult to manufacture a double-sided tilted stem sheet. Conversely, an excessively small width of the base layer may lower the force of fixing a cover sheet to the outer surface of a cushion member.

Further, the thickness of the base layer 2 may be preferably from 0.2 to 2.0 mm, and more preferably from 0.5 to 1.5 mm. An excessively small thickness of the base layer may weaken the strength, and may make it difficult to insert the sheet into a groove portion of a cushion member. Further, when the thickness of the base layer is excessively large, a person seated in a manufactured seat may feel uncomfortable.

The tilted stem group (1) (indicated by the reference sign 4 in FIG. 1 and FIG. 2) is present on the front surface of the base layer, and the tilted stem group (2) (indicated by the reference sign 5 in FIG. 1 arid FIG. 2) is present on the back surface of the base layer.

Preferably, the shape of a tilted stem (indicated by the reference sign 3 in FIG. 1 and FIG. 2) may be a so-called stem shape configured such that the tilted stem protrudes from the surface of a base member in a direction tilted with respect to a vertical direction, and is substantially devoid of a bulging portion or a bent portion in the form of an arrowhead, a mushroom, or a hook (a so-called hook shape), like male engagement elements of a conventional surface fastener. Preferably, the tilted stem may have a linear shape substantially extending straight from the base layer to the tip end of the tilted stem. Preferably, the tip end of the tilted stem may have a tapered shape, as illustrated in FIG. 1 and FIG. 2, so that the tilted stem is easily stuck into a cushion member.

The tilted stems 3 belonging to one group are tilted substantially in one direction with respect to the base layer 2 (T direction illustrated in FIG. 2). Multitudes of stems are aligned in rows in parallel in a direction (Z direction illustrated in FIG. 2) intersecting the tilted direction at an interval (S illustrated in FIG. 2) of 0.3 to 2.5 times of the stem width (W illustrated in FIG. 2). Further, such stem rows are present by two or more rows (three rows in FIG. 2) in parallel on the base layer. Preferably, each stem may have substantially the same stem width (W illustrated in FIG. 2) at an intermediate portion of the stem in height and at a tip end of the stem. When these stems are not tilted in one direction, in other words, when each stem is tilted in directions different from each other, it is difficult to insert the sheet in the embodiment into a groove portion of a cushion member, and the force of preventing pulling out the sheet from the cushion member is greatly lowered.

In the embodiment, a configuration in which all the stems belonging to one group are tilted in one direction is most preferable. The embodiment, however, may include a case in which some of the stems are not tilted in one direction, if the number of such stems is very small.

In the embodiment, preferably, the stems may be aligned in rows in parallel in a direction (Z direction illustrated in FIG. 1) intersecting the tilted direction (T direction illustrated in FIG. 2) of stems in the point of manufacturing a surface fastener in the embodiment.

The direction intersecting the tilted direction (T direction illustrated in FIG. 2) corresponds to an angle range of from 30 degrees to 150 degrees with respect to the tilted direction of stems (T direction illustrated in FIG. 2). When the angle is out of the aforementioned angle range, the force of resisting against the pulling force is lowered at a groove portion of a cushion member. More preferably, stems may be aligned in rows in parallel at an angle of from 45 to 135 degrees, and particularly preferably at an angle of from 60 to 120 degrees with respect to the tilted direction.

Forming a plurality of stem rows in parallel is important in the points of increasing the engagement force and facilitating the engagement. Specifically, when there is only one stem row, the force of resisting against the pulling force may be lowered at a groove portion of a cushion member.

Preferably, the interval between stem rows (a distance between root portions of stems constituting stem rows adjacent to each other) may be from 1 to 8 mm.

In the double-sided tilted stem sheet in the embodiment, employing a manufacturing method to be described later allows for each stem to have substantially the same width between an intermediate portion of the stem in height, and a tip end of the stem. The stem width is indicated by the reference sign W in FIG. 2. In the embodiment, a configuration such that stems have substantially the same width means that the ratio between the width of an intermediate portion of the stem in height and the width of a tip end of the stem is in the range of from 2/3 to 3/2. The width, the height, and the interval in the embodiment are respectively an average value of widths of optionally selected tem stems, an average value of heights of optionally selected ten stems, and an average value of intervals between optionally selected ten stems.

In the embodiment, preferably, the height of a tilted stem (H illustrated in FIG. 1 and FIG. 2: the length of a line perpendicular to the base layer from a top portion of a stem) may be from 0.5 to 10 mm. An excessively large stem height may bend or fold a stem when a force is exerted on the tilted stem. Conversely, an excessively small stem height may lower the force of resisting against the pulling force at a groove portion of a cushion member. More preferably, the stem height may be from 1 to 7 mm.

Further, preferably, the stem width (W illustrated in FIG. 2) may be from 0.3 to 3 mm. An excessively large stem width may lower the force of resisting against the pulling force at a groove portion of a cushion member. Conversely, an excessively small stem width may lower the stem strength, and may lower the force of resisting against the pulling force at a groove portion of a cushion member. More preferably, the stem width may be from 0.5 to 2 mm.

Further, in the double-sided tilted stem sheet in the embodiment, preferably, tilted stems may be present on each of the front surface and the back surface of a base layer in the unit of 5 to 60 stems per cm² of the base layer. When the number of tilted stems per unit area is smaller than five, the force of resisting against the pulling force may be lowered at a groove portion of a cushion member. Conversely, when the number of tilted stems per unit area is larger than sixty, the force of resisting against the pulling force may also be lowered at a groove portion of a cushion member. More preferably, the number of tilted stems per unit area may be from 8 to 40 stems/cm².

Further, the tilted angle of each tilted stem illustrated in FIG. 1 (θ: the angle defined by a straight line connecting the middle portion of a root portion of the tilted stem and the tip end of the tilted stem, and the base layer) may be preferably from 25 to 70 degrees. When the tilted angle is smaller than 25 degrees or exceeds 70 degrees, the force of resisting against the pulling force may be lowered at a groove portion of a cushion member. More preferably, the tilted angle may be from 35 to 65 degrees.

Further, in the double-sided tilted stem sheet in the embodiment, preferably, the sectional area of each tilted stem at the intermediate portion of the tilted stem in height may be from 0.25 to 4 mm². When the sectional area is smaller than 0.25 mm², the stems are likely to bend, and the engagement force may be lowered. On the other hand, when the sectional area exceeds 4 mm², the stems are less likely to be stuck into foamed resin, which is not preferable. More preferably, the sectional area may be from 0.6 to 2 mm². The section in the embodiment indicates a section of a stem taken along a plane perpendicular to the tilt of the stem.

An example of a main component constituting the base layer and the stems is thermoplastic synthetic resin that is less likely to cause elastic deformation in the vicinity of normal temperature (namely, non-elastomeric resin). Examples of the resin are polyolefin-based thermoplastic resin such as polyethylene and polypropylene; polyester-based thermoplastic resin such as polyethylene terephthalate, polybutyrene terephthalate, and polylactic acid; and polyamide-based thermoplastic resin such as Nylon 6 and Nylon 66. Among these, it is preferable to use polyolefin-based resin, particularly, polypropylene resin containing a small amount of polypropylene or polyethylene.

It is preferable to mix elastomeric thermoplastic resin in view of the points that thermoplastic resin is advantageous in lowering the rigidity and increasing the flexibility; a sheet having tilted stems on both surfaces thereof is less likely to be torn from a stitched portion even with use of stitching means in attaching the double-sided tilted stem sheet to a cover sheet; and a cushion member is foldable even when a groove portion formed in the cushion member is bent. The elastomeric thermoplastic resin is a material which has rubberlike elasticity or bendability particularly in the vicinity of normal temperature, and which can be softened and easily molded in a high temperature condition. Specifically, examples of the elastomeric thermoplastic resin are styrene elastomer, vinyl chloride elastomer, olefin elastomer, urethane elastomer, and amide elastomer. Particularly, when polyolefin-based resin e.g. polypropylene is selected as a main component constituting a base layer, olefin elastomer is excellent as the thermoplastic elastomer to be added in the points of homogeneous mixabililty with the main component, moldability, and the strength of a surface fastener to be obtained. Olefin elastomer is an elastomer such that rubberlike elasticity is imparted by adding ethylene-propylene rubber or EPDM to polypropylene resin. The amount of thermoplastic elastomer to be added to non-elastomeric thermoplastic resin as a main component of a base layer is from 5 to 50 % by weight, and particularly appropriately from 10 to 30 % by weight. Further, when resin is in an interim state between elastomeric resin and non-elastomeric resin such as polyester elastomer, it is possible to use polyester elastomer alone. A representative example of polyester elastomer is Hytrel from Toray Industries, Inc.

A sheet having tilted stems on the front surface and on the back surface thereof is obtained in a simplified manner by the following method, for instance.

Specifically, first of all, thermoplastic resin is melt-extruded in the form of a tape through a nozzle having a slit of substantially the same shape as the sectional configuration of the double-sided tilted stem sheet as illustrated in FIG. 1, and is cooled to form a tape-like article having, on the front surface of a base layer, a plurality of ridges tilted with respect to the base layer and having a tilted stem section continuing in the tape length direction, and having, on the back surface of the base plate, a plurality of ridges having a tilted stem section as described above. Preferably, the number of ridges for tilted stems may be two to five per cm of an elongated tape. Preferably, the tape width may be from 10 to 60 mm after elongation.

Subsequently, the ridges for tilted stems present on the front surface and on the back surface of the tape-like article are notched at a small interval in a direction crossing the ridge length direction from the tip end of the ridge to the vicinity of the root portion of the ridge. When the angle of the notch is a right angle with respect to the length direction of the tape-like article, the sectional configuration of a stem on a plane parallel to the base layer is a square or a rectangle. When the angle of the notch is not a right angle, the sectional configuration of a stem is a parallelogram. As the angle is away from a right angle, the parallelogram has a more acute angle. The interval of notches is from 0.3 to 3 mm, and particularly appropriately from 0.5 to 2 mm.

Subsequently, the notched tape-like article is elongated in the length direction. The elongation ratio may be such that the length of the tape-like article after elongation is from 1.3 to 3.5 times of the length of the tape-like article before elongation. By the elongation, the notches in the ridges are extended, and the ridges turn into rows of multitudes of tilted stems independent of each other. More preferably, the elongation ratio may be from 1.6 to 2. 5 times. With use of the aforementioned method, whereas the base layer is elongated, the stems are kept substantially non-elongated. Further, stems are aligned in rows in a direction intersecting the tilted direction of stems. The ends of stems in the stem row direction form a flat plane. The aforementioned structure makes it easy to obtain stems of a large height, and makes it easy to obtain stems that are easily stuck into the inner wall of a groove portion of a cushion member.

Carrying out the aforementioned method makes it possible to obtain a sheet in the embodiment having multitudes of independent tilted stems on the front surface and on the back surface thereof.

Next, there is described a technique for fixing a cover sheet to the outer surface of a seat cushion member, with use of a double-sided tilted stem sheet in the embodiment.

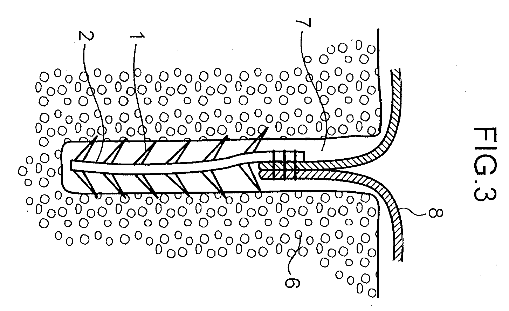

FIG. 3 is a sectional view of a portion of a cushion member where a cover sheet is fixed, using a double-sided tilted stem sheet in the embodiment. As is clear from FIG. 3, the double-sided tilted stem sheet in the embodiment is fixed to the cover sheet in such a manner that one end of the base layer, corresponding to the tip ends of tilted stems in the tilted direction of tilted stems of the double-sided tilted stem sheet, is fixed to the back surface of the cover sheet, whereas the other end of the base layer is disposed to be away from the cover sheet as a free end. Examples of the fixing method are a method using stitching, a method using stapling, a method using an adhesive, and a method using thermal fusion.

Generally, as a cover sheet, there is used a sheet including an outer cover member made of fabric such as woven fabric or knitted fabric, or leather such as artificial leather or natural leather, and a thin foamed polyurethane sheet attached to the back surface of the outer cover member. The cover sheet is obtained by stitching the aforementioned sheet into such a shape as to cover the entirety or a part of a cushion member.

Meanwhile, generally, a cushion member is obtained by injecting a molding resin liquid as represented by a foamable polyurethane liquid into a die having a seat shape to foam and cure the resin, and by taking out the cured resin from the die. A groove portion for fixing a cover sheet is formed at a predetermined position in the cushion member. The groove portion may be formed at the time of forming the cushion member. Alternatively, the groove portion may be formed by heating a part of the cushion member after molding, or may be formed by notching a part of the cushion member with use of a cutter. The groove portion in the embodiment may include notches such that although there is no apparent clearance when viewed from above, an object is insertable by widening the notches.

A cover sheet is covered to the thus obtained cushion member, and the double-sided tilted stem sheet in the embodiment, which is attached to the back surface of the cover sheet, is inserted into the groove portion formed in the cushion member. When the double-sided tilted stem sheet is inserted into the groove portion, it is possible to easily insert the double-sided tilted stem sheet to the depth of the groove portion along the groove portion in a state that the end of the double-sided tilted stem sheet opposite to the end thereof that is fixed to the cover sheet serves as the leading end, because the tilted direction of tilted stems of the sheet is not a direction of blocking insertion of the sheet. After the insertion, even if the double-sided tilted stem sheet is attempted to be pulled out, the tilted stems present on both surfaces of the sheet resist against the pulling force. Thus, the cover sheet is firmly fixed to the outer surface of the cushion member.

Preferably, the width of the groove portion to be formed in the cushion member may be 0.9 time or less of the thickness of the double-sided tilted stem sheet (a distance, on a plane perpendicular to the base layer, from the tip end of the stem on the front surface (the surface where the tilted stem group (1) is present) to the tip end of the stem on the back surface (the surface where the tilted stem group (2) is present). Preferably, the thickness of the double-sided tilted stem sheet may be 3 mm or less. If the thickness exceeds 3 mm, the double-sided tilted stem sheet inserted into the groove portion is likely to be pulled out of the groove portion. In view of the above, more preferably, the thickness may be from 0.5 to 2 mm. In this way, the double-sided tilted stem sheet is fixed to the groove portion of the cushion member, and the cover sheet is fixed to the outer surface of the cushion member.

In the embodiment, in order to advantageously prevent pulling out of the double-sided tilted stem sheet inserted into the groove portion from the groove portion, it is possible to inject polyurethane having a high crosslinkability or a polyurethane liquid having a high hard segment ratio into a portion of a cushion member where the groove portion is to be formed in forming the cushion member; or it is possible to coat hard resin to the surface of the groove portion so that the inner wall portion of the groove portion is covered with hard foamed resin. Further, it is possible to use a material capable of increasing the frictional resistance with respect to the double-sided tilted stem sheet, such as an anti-slipping agent or a well-known material capable of increasing the tackifier ability, for the inner wall of the groove portion. When polyurethane resin is used, it is possible to use a compound, in which the number average molecular weight of polyol is lowered. Further, it is possible to form a concavo-convex portion that corresponds the stem rows of the double-sided tilted stem sheet on the inner wall of the groove portion, so that the tip ends of tilted stems are stuck into or are strongly abutted against the concave portion of the inner wall of the groove portion. Further, it is preferable to use a method, in which at least a part of the inner wall of the groove portion is covered with a surface fastener having loop-like stems, and the tilted stems of the double-sided tilted stem sheet inserted into the groove portion are engaged with loop-like engagement elements for further preventing pulling out of the double-sided tilted stem sheet from the groove portion. In this case, there is no need of covering the entire surface of the inner wall of the groove portion with a surface fastener having loop-like engagement elements. A part of the inner wall or one surface of the inner wall may be covered with a surface fastener having loop-like engagement elements.

### (Second Embodiment)

In the second embodiment, a double-sided tilted stem sheet is formed by folding a sheet, in which a tilted stem group (1) is present on one side on the front surface of a base member with respect to the middle portion of the base member, and a tilted stem group (2) is present on the other side on the front surface of the base member along the middle portion of the base member.

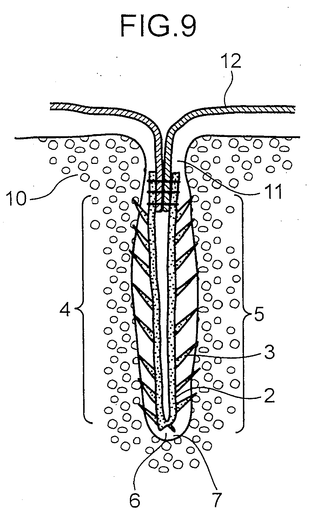

As illustrated in FIG. 9, folding the sheet along the middle portion of the base member makes it possible to form the sheet, in which the tilted stem group (1) is present on the front surface of the base layer, and the tilted stem group (2) is present on the back surface of the base layer.

Both of the tilted stems present in the tilted stem group (1) and in the tiled stem group (2) of the double-sided tilted stem sheet in the second embodiment after being folded also satisfy the aforementioned requirements (A) to (D).

More preferably, the tilted stem sheet in the second embodiment may satisfy the following requirement (E) concerning the sheet before being folded, in addition to the aforementioned requirements (A) to (D).
(E) Both of the stems present in the tilted stem group (1) and the stems present in the tilted stem group (2) are tilted in a direction to be away from the middle portion of the base member.

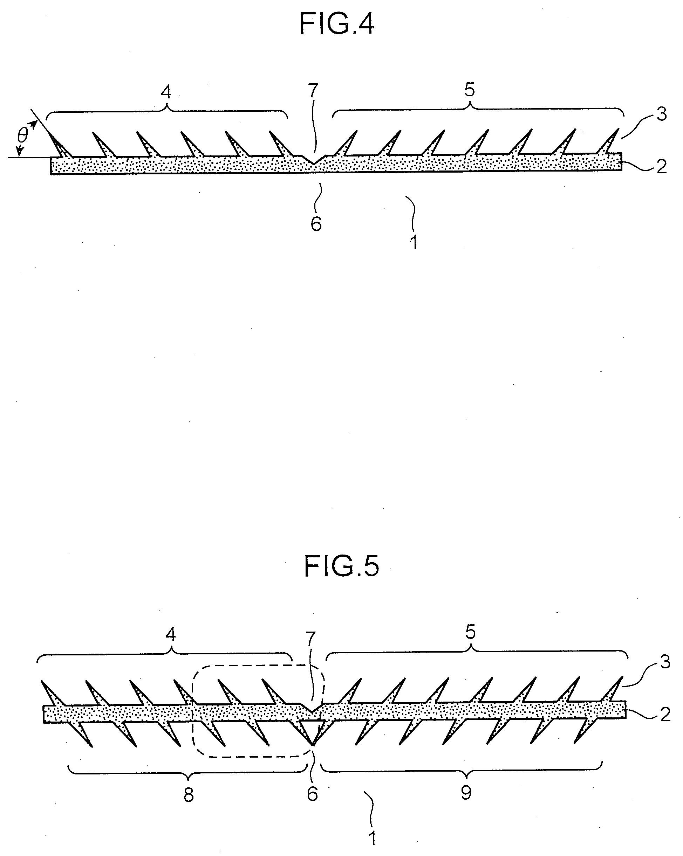

When the aforementioned requirement is satisfied, it is possible to fix the tilted stem sheet in the groove portion of the cushion member, and there is no or less likelihood that the tilted stem sheet my be pulled out of the groove portion. FIGS. 4 to 8 illustrate sectional views of the tilted stem sheet that satisfies these requirements. Specifically, it is clear that any one of the tilted stems present in the group 4 and in the group 5 in FIGS. 4 to 8 is tilted with respect to the vertical direction. All the tilted stems present in the group 4 and the tilted stems belonging to the group 5 in FIGS. 4 to 7 are tilted in a direction to be away from the middle portion of the base member.

Further, preferably, the tilted stem sheet in the embodiment may also include tilted stems on the back surface thereof, and may satisfy the following requirements (F) and (G).
(F) Both of the tilted stem group (3) and the tilted stem group (4) are such that multitudes of the stems are formed close together and protrude from the back surface of the base member while being tilted in one direction.
(G) Both of the stems present in the tilted stem group (3) and the stems present in the tilted stem group (4) are tilted in a direction toward the middle portion of the base member.

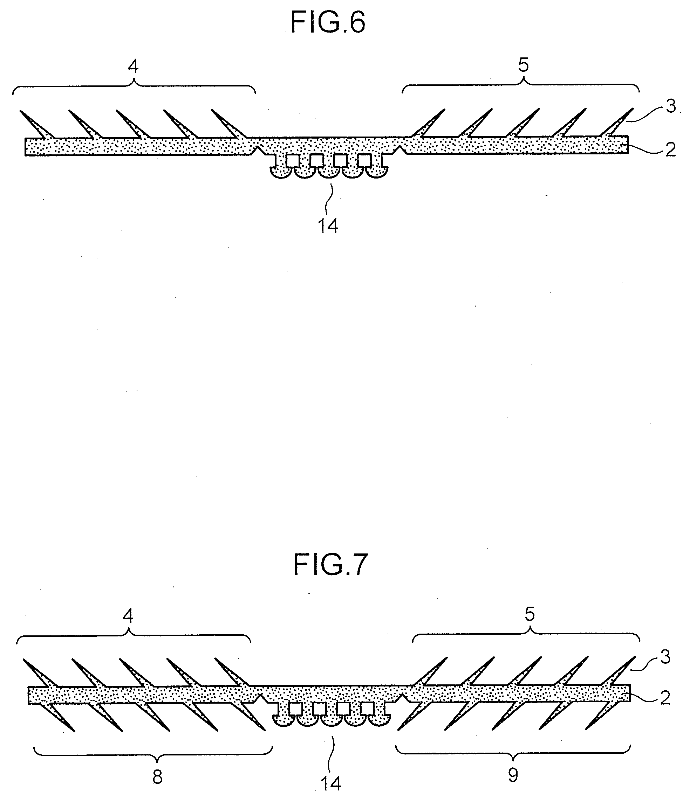

Satisfying the aforementioned requirements (F) and (G) makes it possible to firmly fix the cover sheet in the groove portion of the cushion member. FIG. 5 and FIG. 7 are sectional views of a double-sided tilted stem sheet that satisfies the requirements (F) and (G). Specifically, all the tilted stems belonging to the group 8 and to the group 9 in FIG. 5 and FIG. 7 are tilted in a direction toward the middle portion of the base member.

The requirements such that "tilted in one direction" and "tilted in a direction to be away from the middle portion of the base member" may include a case, in which some of the stems do not satisfy the aforementioned requirements, if the number of such stems is very small. It is needless to say that a configuration in which all the tilted stems satisfy the aforementioned requirements is most preferable.

In the following, the tilted stem sheet in the second embodiment is described in detail using FIGS. 4 to 11.

The tilted stem sheet in the embodiment in a state before being folded is provided with a base member (indicated by the reference sign 2 in FIG. 4), and is configured such that a tilted stem group (1) (indicated by the reference sign 4 in FIG. 4) and a tilted step group (2) (indicated by the reference sign 5 in FIG. 4) are present on the front surface of the base member. These tilted stems are abutted against or stuck into a wall surface of a groove portion formed in a cushion member, thus preventing pulling out of the tilted stem sheet from the groove portion. Further, the tilted stem sheet is fixed to the back surface of the cover sheet. Therefore, the cover sheet is fixed to the outer surface of the cushion member. To simplify the description, in the following, a tilted stem sheet before being folded (in a spread state) may be also called as a sheet in the embodiment.

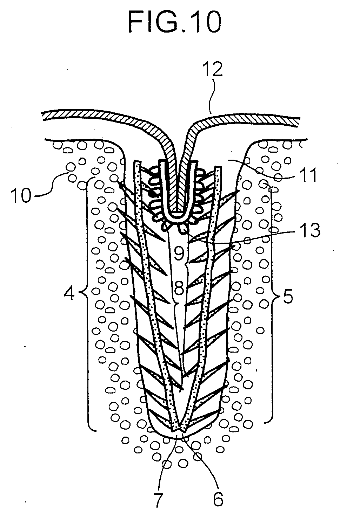

Alternatively, as illustrated in FIG. 6 and FIG. 7, male engagement elements (indicated by the reference sign 14 in FIG. 6 and FIG. 7) engageable with loop-like engagement elements may be formed on the back surface of the base member. Further alternatively, as illustrated in FIG. 7 and FIG. 10, the double-sided tilted stem sheet may be configured such that the tilted stem group (3) (indicated by the reference sign 8 in FIG. 7 and FIG. 10) and the tilted stem group (4) (indicated by the reference sign 9 in FIG. 7 and FIG. 10) are present on the back surface of the base member. Furthermore alternatively, as illustrated in FIG. 7, the double-sided tilted stem sheet may be configured such that the male engagement elements (indicated by the reference sign 14 in FIG. 7) are present on the back surface of the base member.

The presence of the tilted stem groups (3) and (4) makes it possible to engage the tip ends of the tilted stems in the tilted stem group (3) and in the tilted stem group (4) with loop-like engagement elements of a surface fastener including the loop-like engagement elements, which is attached to the back surface of the cover sheet. This is advantageous in fixing the cover sheet by the double-sided tilted stem sheet, and accordingly, in firmly fixing the cover sheet to the outer surface of the cushion member by the double-sided tilted stem sheet that is inserted into the groove portion of the cushion member. Further, when male engagement elements are present, engagement of the male engagement elements with the loop-like engagement elements attached to the back surface of the cover sheet is further advantageous in firmly fixing the cover sheet to the outer surface of the cushion member.

In the tilted stem sheet in the embodiment, a portion of the base member that is easily foldable is formed between the tilted stem group (1) and the tilted stem group (2). Examples of the method for folding the base member are a method in which the aforementioned portion of the base member is formed to have a smaller thickness than the thickness of the other portion of the base member, a method in which notches are formed in the aforementioned portion of the base member, and a method in which perforations are formed in the aforementioned portion of the base member. In FIGS. 4 to 8, the method, in which the aforementioned portion of the base member is formed to have a smaller thickness, is employed. Further, it is possible to employ a method, in which a boundary portion between a portion of the base member including the tilted stem group (1) on the front surface thereof, and a portion of the base member including the tilted stem group (2) on the front surface thereof is made of a flexible resin.

The middle portion of the base member in the embodiment is not a middle portion of the base member in the width direction of the base member in a strict sense, but is a boundary portion at which the tilted stem group (1) and the tilted stem group (2) are separated from each other, or the tilted stem group (3) and the tilted stem group (4) are separated from each other. Normally, in view of a point that the tilted stem group (1) and the tilted stem group (2) have the same distribution, it is often the case that the middle portion of the base member indicates an intermediate portion between the tilted stem group (1) and the tilted stem group (2). Further, in view of a point that the tilted stem group (3) and the tilted stem group (4) have the same distribution, it is often the case that the middle portion of the base member indicates an intermediate portion between the tilted stem group (3) and the tilted stem group (4).

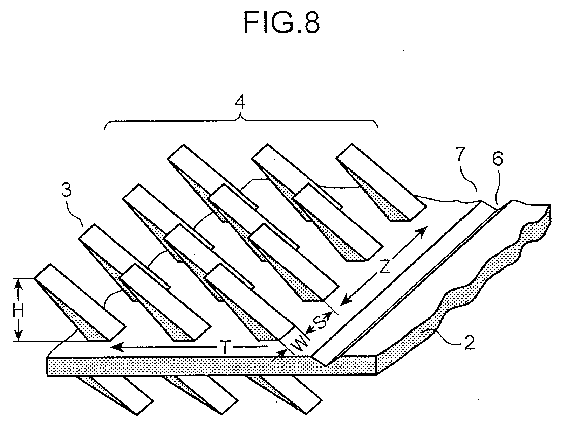

The width of the base member 2 constituting the tilted stem sheet in the embodiment indicates the length of a tilted stem illustrated in FIGS. 4 to 7 from one end thereof to the other end thereof, in other words, the length of a tilted stem in the tilted direction (T direction illustrated in FIG. 8). The width of the base member 2 may be preferably from 20 to 70 mm, more preferably from 30 to 60 mm, and furthermore preferably from 40 to 50 mm An excessively large width of the base member may make it difficult to form the base member. Conversely, an excessively small width of the base member may lower the force of fixing the cover sheet to the outer surface of the cushion member.

Further, the thickness of the base member 2 may be preferably from 0.2 to 2 mm, and more preferably, from 0.5 to 1 mm. An excessively small thickness of the base member may weaken the strength, or may make it difficult to insert the sheet into the groove portion of the cushion member. Conversely, when the thickness of the base member 2 is excessively large, a person seated in a manufactured seat may feel uncomfortable. The length of the base member 2, in other words, the length of the base member 2 in Z direction illustrated in FIG. 8 varies depending on the place where the base member 2 is to be used, but is generally from 20 to 700 mm.

The tilted stem group (1) (indicated by the reference sign 4 in FIG. 4) and the tilted stem group (2) (indicated by the reference sign 5 in FIG. 4) are present on the front surface of the base member.

As well as the first embodiment as described above, preferably, the shape of the tilted stem (indicated by the reference sign 3 in FIGS. 4 to 8) in the embodiment may be a so-called stem shape configured such that the tilted stem protrudes from the surface of the base member in a direction tilted with respect to the vertical direction, and is substantially devoid of a bulging portion or a bent portion in the form of an arrowhead, a mushroom, or a hook (a so-called hook shape), like male engagement elements of a conventional surface fastener. Preferably, the tilted stem may have a linear shape substantially extending straight from the base layer to the tip end thereof. Preferably, the tip end of the tilted stem may have a tapered shape, as illustrated in FIGS. 4 to 8, so that the tilted stem is easily stuck into a cushion member.

All the tilted stems (indicated by the reference sign 3 in FIGS. 4 to 8) belonging to one group are required to be tilted substantially in one direction with respect to the base member 2. Further, both of the stems present in the tilted stem group (1) and the stems present in the tilted stem group (2) are required to be tilted in a direction to be away from the middle portion of the base member (indicated by the reference sign 6 in FIG. 4). Because the stems are tilted in one direction and in a direction to be away from the middle portion as described above, folding the tilted stem sheet along the middle portion in such a manner that the tilted stems face outside, fixing the tilted stem sheet to the back surface of the cover sheet, and inserting the tilted stem sheet into the groove portion of the cushion member in such a manner that the folded portion comes close to the bottom portion of the groove portion of the cushion member allows for the tilted stems to resist against the force of pulling out the cover sheet from the cushion member. Thus, the cover sheet is fixed to the outer surface of the cushion member. Note that a large resistance is not generated when the tilted stem sheet is inserted into the groove portion.

Preferably, the tilted stem sheet in the embodiment may be configured such that multitudes of stems are aligned in rows in parallel in a direction (Z direction illustrated in FIG. 8) intersecting the tilted direction of stems at an interval (S illustrated in FIG. 8) of 0.3 to 2.5 times of the stem width (W illustrated in FIG. 8). Preferably, such stem rows may be present by two or more rows (three rows in FIG. 8) in parallel on the base member. Preferably, each stem may have substantially the same stem width (W illustrated in FIG. 8) at an intermediate portion of the stem in height and at a tip end of the stem. When these stems are not tilted in one direction, in other words, when each stem is tilted in directions different from each other, the force of preventing pulling out the sheet from the cushion member is greatly reduced.

In the embodiment, a configuration such that all the stems belonging to one group are tilted in one direction is most preferable. The embodiment, however, may include a case in which some of the stems are not tilted in one direction, if the number of such stems is very small.

In the embodiment, preferably, the stems may be aligned in rows in parallel in a direction (Z direction illustrated in FIG. 8) intersecting the tilted direction (T direction illustrated in FIG. 8) of stems in the point of manufacturing a surface fastener in the embodiment. The stems in the embodiment indicate both of the tilted stems present on the front surface of the base member and the tilted stems present on the back surface of the base member.

The direction intersecting the tilted direction (T direction illustrated in FIG. 8) corresponds to an angle range of from 30 degrees to 150 degrees, on the base member plane, with respect to the tilted direction (T direction in FIG. 8) of stems (in FIG. 8, approximately 90 degrees). Deviation from the aforementioned angle range may lower the force of resisting against the pulling force at a groove portion of a cushion member. More preferably, the stems may be aligned in rows in parallel at an angle of from 45 to 135 degrees, and particularly preferably, at an angle of from 60 to 120 degrees with respect to the tilted direction.

Forming a plurality of stem rows in parallel is important in the points of increasing the engagement force and facilitating the engagement. Specifically, when there is only one stem row, the force of resisting against the pulling force at a groove portion of a cushion member may be lowered.

Preferably, the interval between stem rows (a distance between root portions of stems constituting stem rows adjacent to each other) may be from 1 to 8 mm.

In the tilted stem sheet in the embodiment, employing a manufacturing method to be described later allows for each stem to have substantially the same width at an intermediate portion of the stem in height, and at a tip end of the stem. The stem width in the embodiment is a width indicated by the reference sign W in FIG. 8. In the embodiment, a configuration such that the stems have substantially the same width means that the ratio of the width at an intermediate portion of the stem in height with respect to the width at a tip end of the stem is in the range of from 2/3 to 3/2. The width, the height, and the interval in the embodiment are respectively an average value of widths of optionally selected ten stems, an average value of heights of optionally selected ten stems, and an average value of intervals between optionally selected ten stems.

In the embodiment, preferably, the height of a tilted stem (H illustrated in FIG. 8: the length of a line perpendicular to the base member from a top portion of a stem) may be from 0.5 to 10 mm. An excessively large stem height may bend or fold a stem when a force is exerted on the tilted stem. Conversely, an excessively small stem height may lower the force of resisting against the pulling force at a groove portion of a cushion member. More preferably, the stem height may be from 1 to 8 mm.

Further, preferably, the stem width (W illustrated in FIG. 8) may be from 0.3 to 3 mm. An excessively large stem width may lower the force of resisting against the pulling force at a groove portion of a cushion member. Conversely, an excessively small stem width may lower the stem strength, and may lower the force of resisting against the pulling force at a groove portion of a cushion member. More preferably, the stem width may be from 0.5 to 2 mm.

Further, in the tilted stem sheet in the embodiment, preferably, tilted stems may be present on the front surface of the base member, more preferably both on the front surface and on the back surface of the base member in the unit of 5 to 60 stems per cm² of the base member. When the number of tilted stems per unit area is smaller than five, the force of resisting against the pulling force or the force of fixing the cover sheet at a groove portion of a cushion member may be lowered. Conversely, when the number of tilted stems per unit area is larger than sixty, the force of resisting against the pulling force may also lowered at a groove portion of a cushion member. More preferably, the number of tilted stems per unit area may be from 8 to 40 stems/cm².

Further, the tilted angle of each tilted stem (θ illustrated in FIG. 4: the angle defined by a straight line connecting the middle portion of a root portion of the tilted stem and the tip end of the tilted stem, and the base member) may be preferably from 25 to 70 degrees. When the tilted angle is smaller than 25 degrees or exceeds 70 degrees, the force of resisting against the pulling force is lowered at a groove portion of a cushion member. More preferably, the tilted angle may be from 35 to 65 degrees.

Further, in the tilted stem sheet in the embodiment, preferably, the sectional area of each tilted stem at an intermediate portion of the tilted stem in height may be from 0.25 to 4 mm². When the sectional area is smaller than 0.25 mm², the stem is likely to bend, and the engagement force may be lowered. On the other hand, when the sectional area exceeds 4 mm², the stem is less likely to be stuck into foamed resin, which is not preferable. More preferably, the sectional area may be from 0.6 to 2 mm². The section in the embodiment indicates a section of a stem taken along a plane perpendicular to the tilt of the stem.

When male engagement elements are formed on the back surface of the base member, as illustrated in FIG. 6 and FIG. 7, each male engagement element may have any one of a hook shape, a mushroom shape, and an arrowhead shape. The arrowhead shape is preferable, because it is possible to form the tilted stems on the front surface, and the male engagement elements at the same time, which will be described later. As illustrated in FIG. 6 and FIG. 7, male engagement elements may be present in the vicinity of the middle portion of the base member in the width direction, or may be present on both ends of the base member in the width direction. Further alternatively, male engagement elements may be present on the entirety of the back surface of the base member. Further alternatively, a surface fastener including male engagement elements may be attached to the back surface of the tilted stem sheet.

Preferably, the arrowhead-shaped male engagement elements may be formed such that an engageable protrusion axially protrudes from the top portion of a stem portion of each engagement element, whereas the engagement elements have a flat surface without engageable protrusions in the engagement element array direction in the point of facilitating the manufacturing process. As illustrated in FIG. 6 and FIG. 7, forming a group of male engagement elements in the vicinity of the middle portion on the back surface of the base member is preferable in the point of facilitating engagement with a loop surface fastener attached to the back surface of the cover sheet, which will be described later.

Preferably, the height of each male engagement element may be from 0.5 to 10 mm, the density of male engagement elements may be from 20 to 120 elements/cm², and the thickness of a stem portion of each male engagement element may be from 0.1 to 2 mm². The male engagement elements are configured to engage with loop-like engagement elements of a loop surface fastener to be attached to the back surface of the cover sheet.

As a main component constituting the base member, the tilted stems, and the male engagement elements, it is possible to use synthetic resin substantially equivalent to the thermoplastic synthetic resin that is less likely to cause elastic deformation in the vicinity of normal temperature (namely, non-elastomeric resin), which is usable in the first embodiment. Preferably, the base member, the stems, and the male engagement elements constituting the tilted stem sheet in the embodiment may be made of one kind of resin in the points of manufacturing and peeling resistance of male engagement elements.

A sheet including tilted stems on the front surface thereof, or a sheet including tilted stems and male engagement elements both on the front surface and on the back surface thereof is obtained in a simplified manner by the following method, for instance.

Specifically, first of all, when a sheet including tilted stems only on the front surface thereof is manufactured, thermoplastic resin is melt-extruded in the form of a tape through a nozzle having a slit of substantially the same shape as the sectional configuration of the tilted stem sheet as illustrated in FIG. 4, and is cooled to form a tape-like article having, on the front surface of a base member, a plurality of ridges tilted with respect to the base member and having a tilted stem section continuing in the tape length direction.

Subsequently, the ridges for tilted stems present on the front surface of the tape-like article are notched at a small interval in a direction crossing the ridge length direction from the tip end of the ridge to the vicinity of the root portion of the ridge. When the angle of the notch is a right angle with respect to the length direction of the tape-like article, the sectional configuration of a stem on a plane parallel to the base layer is a square or a rectangle. When the angle of the notch is not a right angle, the sectional configuration of a stem is a parallelogram. As the angle is away from a right angle, the parallelogram has a more acute angle. The interval of notches is from 0.3 to 3 mm, and particularly appropriately from 0.5 to 2 mm.

Subsequently, the notched tape-like article is elongated in the length direction. The elongation ratio may be such that the length of the tape-like article after elongation is from 1.3 to 3.5 times of the length of the tape-like article before elongation. By the elongation, the notches in the ridges are extended, and the ridges turn into rows of multitudes of tilted stems independent of each other. More preferably, the elongation ratio may be from 1.6 to 2. 5 times. With use of the aforementioned method, whereas the base member is elongated, the stems are kept substantially non-elongated. Further, stems are aligned in rows in a direction intersecting the tilted direction of stems. The ends of stems in the stem row direction form a flat plane. The aforementioned structure makes it easy to obtain stems of a large height, and makes it easy to obtain stems that are easily stuck into the inner wall of the groove portion of the cushion member.

Further, when tilted stems and male engagement elements are also formed on the back surface of the base member, as illustrated in FIGS. 5 to 8, thermoplastic resin is melt-extruded in the form of a tape, as well as the aforementioned manner, through a nozzle having a slit of substantially the same shape as the sectional configuration of the double-sided tilted stem sheet as illustrated in FIG. 5, or through a nozzle having a slit of substantially the same shape as the sectional configuration of the sheet including tilted stems on the front surface thereof and including male engagement elements on the back surface thereof, as illustrated in FIG. 6, or through a nozzle having a slit of substantially the same shape as the sectional configuration of the sheet including tilted stems on the front surface thereof and including male engagement elements and tilted stems on the back surface thereof, as illustrated in FIG. 7. Subsequently, the thermoplastic resin is cooled to form a tape-like article having, on the back surface of the base plate, a plurality of ridges having a tilted stem section or a male engagement element section, as well as on the front surface thereof. Subsequently, when notches are formed in the ridges for tilted stems on the front surface of the base member, notches are also formed in the ridges for tilted stems and in the ridges for male engagement elements on the back surface of the base member, followed by elongation in the same manner as described above. By the elongation, not only the ridges on the front surface, but also the ridges on the back surface turn into rows of multitudes of tilted stems or male engagement elements independent of each other. Preferably, the interval of notches or the direction of forming notches in forming tilted stems or male engagement elements on the back surface may be the same as those in the case where tilted stems are formed on the front surface.

Preferably, the number of ridges for tilted stems may be two to ten per cm of a sheet after elongation. Preferably, the sheet width may be from 20 to 70 mm after elongation.

By carrying out the aforementioned method, it is possible to obtain a tilted stem sheet or a double-sided tilted stem sheet including multitudes of tilted stems independent of each other or multitudes of male engagement elements independent of each other on the front surface or both on the front surface and on the back surface, and it is possible to obtain the sheet in the embodiment by folding the tilted stem sheet or the double-sided tilted stem sheet.

Next, there is described a technique for fixing a cover sheet to the outer surface of a seat cushion member, using a tilted stem sheet in the embodiment.

FIG. 9 is a sectional view of a portion of a cushion member where a cover sheet 12 is fixed, using a tilted stem sheet in the embodiment. As is clear from FIG. 9, both ends of the tilted stem sheet in the embodiment in the tilted direction of tilted stems are fixed to the back surface of the cover sheet, whereas the other end (the middle portion of the base member: the portion indicated by the reference sign 6 in FIG. 9) is disposed to be away from the cover sheet as a free end. Examples of the method for fixing the tilted stem sheet to the back surface of the cover sheet are a method using stitching, a method using stapling, a method using an adhesive, and a method using thermal fusion.

FIG. 10 is a sectional view of a portion of a cushion member where a cover sheet is fixed, using a double-sided tilted stem sheet in the embodiment. In this case, a surface fastener 13 including loop-like engagement elements is attached to the back surface of the cover sheet 12, and tilted stems (indicated by the reference signs 8 and 9) on the back surface of the base member are engaged with loops of the loop-like engagement elements. Thus, it is possible to prevent pulling out of the cover sheet from the double-sided tiled stem sheet.

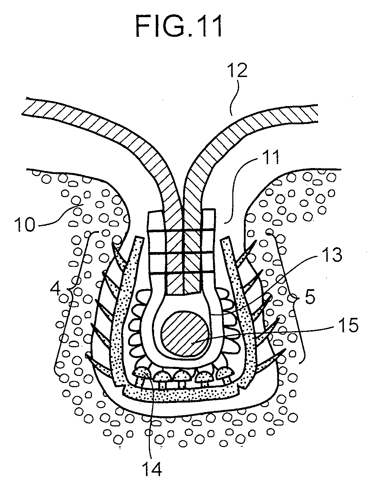

As illustrated in FIG. 11, arrowhead-shaped male engagement elements 14 may be present on the back surface of the tilted stem sheet, in place of the tilted stems. Further alternatively, male engagement elements may be present on both ends on the back surface. Further alternatively, as illustrated in FIG. 11, male engagement elements may be present at the middle portion on the back surface, or may be present on the entirety of the back surface. More preferably, as illustrated in FIG. 7, it is possible to use a method, in which the male engagement elements 14 are present on the middle portion on the back surface, the tilted stems (indicated by the reference signs 8 and 9) are present on both ends on the back surface, and the male engagement elements and the tilted stems on the back surface are used in combination so that there is no or less likelihood that the cover sheet is pulled out of the groove portion of the cushion member by the cooperative operation of the male engagement elements and the tilted stems.

It is needless to say that when male engagement elements are used, it is necessary to attach a surface fastener including loop-like engagement elements on the back surface of the cover sheet at a position facing the male engagement elements.

Generally, as a cover sheet, there is used a sheet including an outer cover member made of fabric such as woven fabric or knitted fabric, or leather such as artificial leather or natural leather, and a thin foamed polyurethane sheet attached to the back surface of the outer cover member. The cover sheet is obtained by stitching the aforementioned sheet into such a shape as to cover the entirety or a part of a cushion member.

Meanwhile, generally, a cushion member is obtained by injecting a molding resin liquid as represented by a foamable polyurethane liquid into a die having a seat shape to foam and cure the resin, and by taking out the cured resin from the die. A groove portion for fixing a cover sheet is formed at a predetermined position of the cushion member. The groove portion may be formed at the time of forming the cushion member. Alternatively, the groove portion may be formed by heating a part of the cushion member after molding, or may be formed by notching a part of the cushion member with use of a cutter. The groove portion in the embodiment may include notches such that although there is no apparent clearance formed by notching with use of a cutter, the clearance is formed by widening the notches.

A cover sheet is covered to the thus obtained cushion member, and the tilted stem sheet in the embodiment, which is attached to the back surface of the cover sheet, is inserted into the groove portion formed in the cushion member. When the tilted stem sheet is inserted into the groove portion, it is easy to insert the tilted stem sheet to the depth of the groove portion along the groove portion in a state that the folded portion of the tilted stem sheet opposite to the end thereof that is fixed to the cover sheet serves as the leading end in view of a point that the tilted direction of tilted stems of the sheet is not a direction of blocking insertion of the sheet. After the insertion, when the tilted stem sheet is attempted to be pulled out of the groove portion, the tilted stems present on the front surface of the sheet resist against the pulling force. Thus, the cover sheet is firmly fixed to the outer surface of the cushion member.

Preferably, the width of the groove portion to be formed in the cushion member may be 0.8 time or less of the thickness of the tilted stem sheet (a distance, on a plane perpendicular to the base layer, rom the tip end of a stem on the front surface to the tip end of a stem on the back surface) to be obtained in folding the tilted stem sheet. Preferably, the width of the groove portion may be 10 mm or less. If the width exceeds 10 mm, the tilted stem sheet inserted into the groove portion is likely to be pulled out of the groove portion. In view of the above, more preferably, the width may be 5 mm or less.

In this way, the tilted stem sheet is fixed to the groove portion of the cushion member, and the cover sheet is fixed to the outer surface of the cushion member.

When a loop surface fastener is attached to the back surface of a cover sheet, as illustrated in FIG. 11, generally, there is used a method, in which ends of a fabric sheet constituting the cover sheet are placed one over the other, and the overlapped portion is covered into a pouched shape by the loop surface fastener. In order to secure engagement between the loop surface fastener and the male engagement elements, and to securely cause the tilted stems to abut against or to be stuck into the wall surface of the cushion member, as illustrated in FIG. 11, a filler 15 may be filled in the pouched portion of the loop surface fastener. Examples of the filler are a cylindrical bar or a prismatic bar made of elastomeric resin, and a cylindrical bar or a prismatic bar made of foamed resin.

In the embodiment, as well as the aforementioned configuration, in order to advantageously prevent pulling out of the double-sided tilted stem sheet inserted into the groove portion from the groove portion, a filler may be filled in a pouched portion formed by folding the tilted stem sheet into two parts in such a manner that the tilted stems of the tilted stem sheet are pressed against the wall surface of the groove portion of the cushion member.

Further, it is possible to inject polyurethane having a high crosslinkability or a polyurethane liquid having a high hard segment ratio into a portion of a cushion member where the groove portion is to be formed in forming the cushion member; or it is possible to coat hard resin to the surface of the groove portion so that the inner wall portion of the groove portion is covered with hard foamed resin. Further, it is possible to use a material capable of increasing the frictional resistance with respect to the double-sided tilted stem sheet, such as an anti-slipping agent or a well-known material capable of increasing the tackifier ability, for the inner wall of the groove portion. When polyurethane resin is used, it is possible to use a compound, in which the number average molecular weight of polyol is lowered. Further, it is possible to form a concavo-convex portion that corresponds the stem rows of the double-sided tilted stem sheet on the inner wall of the groove portion so that the tip ends of the tilted stems are stuck into or are strongly abutted against the convex portion of the groove portion.

Further, it is preferable to use a method, in which at least a part of the inner wall of the groove portion is covered with a surface fastener including loop-like stems, and the tilted stems of the tilted stem sheet inserted into the groove portion are engaged with loop-like engagement elements for preventing pulling out of the tilted stem sheet from the groove portion. In this case, it is not necessary to cover the entire surface of the inner wall of the groove portion with a surface fastener including loop-like engagement elements. A part of the inner wall or one surface of the inner wall may be covered with a surface fastener including loop-like engagement elements.

As described above, the tilted stem sheet in the embodiment is used as a member for integrally fixing a cover sheet (an outer cover member) for covering a cushion member to the cushion member for use in an automobile seat, a train seat, an airplane seat, or an office chair. The tilted stem sheet in the embodiment is also used as a fixing member in fixing an object to the outer surface of a foamed member, in addition to the aforementioned seats and chairs.

The present specification discloses various techniques as described above. The following is a summary of the main technique.

A sheet according to an aspect of the invention is a sheet provided with a tilted stem group (1) present on a front surface of a base layer and a tilted stem group (2) present on a back surface of the base layer, wherein
both of tilted stems present in the tilted stem group (1) and in the tilted stem group (2) are such that:
multitudes of the tilted stems are formed close together;
the tilted stems protrude in a direction tilted with respect to a vertical direction;
the tilted stems protrude in one direction from the surface of the base layer; and
the tilted stems are tilted in directions symmetrical across the base layer.

The inventive tilted stem sheet is used as a member for integrally fixing a cover sheet (an outer cover member) for covering a cushion member to the cushion member for use in an automobile seat, a train seat, an airplane seat, or an office chair. Use of the inventive sheet having the aforementioned configuration makes it possible to remarkably increase the ability of fixing the cover sheet to the cushion member.

More specifically, the unique double-sided tilted stem sheet is attached to the back surface of the cover sheet. The double-sided tilted stem sheet is inserted into the narrow groove portion formed in the outer surface of the cushion member to such an extent that the tilted stems of the double-sided tilted stem sheet are stuck into or abutted against the inner wall surface of the groove portion of the cushion member. According to this configuration, the tilted stems of the double-sided tilted stem sheet are tilted in such a direction as to resist against the pulling force when the double-sided tilted stem sheet is attempted to be pulled out of the groove portion. Thus, the tilted stems act like a "barb" on a fishing hook, and resist against the pulling force. This makes it possible to prevent pulling out of the double-sided tilted stem sheet from the groove portion of the cushion member.

As described above, there is no need of fixing a male surface fastener in advance at a predetermined position in a molding die, as is required in the conventional art. Therefore, it is not necessary to provide prevention against a case such that the outer surface of the male surface fastener may be covered with a resin liquid for forming a cushion member in forming the cushion member. Further, there is no need of providing a countermeasure against covering the surface of the male surface fastener with the resin liquid for forming a cushion member. Thus, it is possible to remarkably increase the speed of forming a cushion member. This is advantageous in enhancing the productivity.

In the embodiment, the base layer may be constituted of one layer. Alternatively, a sheet provided with the tilted stem group (1) present on one side on a front surface of a base member with respect to a middle portion of the base member, and the tilted stem group (2) present on the other side on the front surface of the base member may be formed by folding the sheet along the middle portion of the base member.

When the base layer is constituted of one layer, preferably, the inventive sheet may be further provided with the following configurations.

The stems are aligned in rows in a direction intersecting the tilted direction of stems, and ends of the stems in the stem row direction form a flat plane.

The aforementioned configuration is advantageous in obtaining stems of a large height, and in obtaining stems that are easily stuck into the inner wall of the groove portion of the cushion member.

The sheet having the tilted stems on both surfaces thereof is made of thermoplastic resin. Whereas the base layer is elongated, the stems are kept substantially non-elongated.

The aforementioned configuration is advantageous in obtaining stems of a large height, and in securely obtaining stems that are easily stuck into the inner wall of the groove portion of the cushion member.

A seat according to another aspect of the invention is a seat made of a seat cushion member covered with a cover sheet. The sheet having the tilted stems on both surfaces thereof is inserted into a groove portion formed in the seat cushion member in such a manner that an end of the base layer, corresponding to tip ends of the tilted stems in the tilted direction of the tilted stems of the sheet, is fixed to a back surface of the cover sheet, whereas the other end of the base layer is mounted on the back surface of the cover sheet as a free end, and in such a manner that the tip ends of the tilted stems are stuck into or abutted against an inner wall surface of the groove portion.

According to the aforementioned configuration, it is possible to provide a high-quality seat with no or less likelihood that the double-sided tilted stem sheet inserted into the groove portion may be pulled out of the groove portion.

In the seat having the aforementioned configuration, the width of the groove portion may be preferably 8 mm or smaller, more preferably 5 mm or smaller, and furthermore preferably 3 mm or smaller, before the sheet having the tilted stems on both surfaces thereof is inserted. According to the aforementioned configuration, inserting the sheet into the cushion member allows for the tilted stems to be stuck into the cushion member by elastic recovery of the cushion member. This is advantageous in firmly fixing the sheet to the cushion member.

Further, in the seat having the aforementioned configuration, preferably, a concavo-convex portion that corresponds stem rows of the sheet having the tilted stems on both surfaces thereof may be formed on an inner wall of the groove portion.

The aforementioned configuration is more advantageous in preventing pulling out of the double-sided tilted stem sheet inserted into the groove portion from the groove portion.

Further, in the seat having the aforementioned configuration, preferably, a material capable of increasing a frictional resistance with respect to the sheet having the tilted stems on both surfaces thereof may be added to an inner wall of the groove portion.

The aforementioned configuration is more advantageous in preventing pulling out of the double-sided tilted stem sheet inserted into the groove portion from the groove portion.

Further, in the seat having the aforementioned configuration, preferably, an inner wall of the groove portion may be covered with hard foamed resin.

The aforementioned configuration is more advantageous in preventing pulling out of the double-sided tilted stem sheet inserted into the groove portion from the groove portion.

Further, in the seat having the aforementioned configuration, preferably, a loop surface fastener may be attached to an inner wall of the groove portion.

The aforementioned configuration is more advantageous in preventing pulling out of the double-sided tilted stem sheet inserted into the groove portion from the groove portion.

When the sheet provided with the tilted stem group (1) present on one side on a front surface of a base member with respect to a middle portion of the base member, and the tilted stem group (2) present on the other side on the front surface of the base member is formed by folding the sheet along the middle portion of the base member, preferably, the sheet may be further provided with the following configurations.

Both of the stems present in the tilted stem group (1) and the stems present in the tilted stem group (2) are tilted in a direction to be away from the middle portion of the base member.

According to the aforementioned configuration, it is possible to securely fix the tilted stem sheet in the groove portion of the cushion member. This is advantageous in preventing pulling out of the tilted stem sheet from the groove portion.

Further, a portion of the base member that is easily foldable is formed between the tilted stem group (1) and the tilted stem group (2).

According to the aforementioned configuration, it is easy to fold the sheet along the middle portion of the base member.

Further, preferably,
a tilted stem group (3) may be present on one side on a back surface of the base member with respect to the middle portion of the base member, and a tilted stem group (4) may be present on the other side on the back surface of the base member, and
both of the tilted stem group (3) and the tilted stem group (4) may be such that:
multitudes of the tilted stems are formed close together, and protrude from the back surface of the base member while being tilted in one direction; and
both of the stems present in the tilted stem group (3) and the stems present in the tilted stem group (4) are tilted in a direction toward the middle portion of the base member.

The aforementioned configuration is advantageous in firmly fixing the cover sheet in the groove portion of the cushion member.

Further, preferably, male engagement elements engageable with loop-like engagement elements may be present on a back surface of the base member. This is because engagement of the male engagement elements with the loop-like engagement elements attached to the back surface of the cover sheet is advantageous in firmly fixing the cover sheet to the outer surface of the cushion member.

Further, preferably, multitudes of male engagement elements may be present between the tilted stem group (3) and the tilted stem group (4). This is advantageous in securely obtaining the aforementioned effects.

A seat according to yet another aspect of the invention is a seat made of a seat cushion member covered with a cover sheet. Both ends of the tilted stem sheet are fixed to a back surface of the cover sheet in such a manner that an outer surface of the tilted stem sheet faces outside. The tilted stem sheet is inserted into a groove portion formed in the cushion member in such a manner that the outer surface of the tilted stem sheet comes into contact with an inner wall of the groove portion. The tilted stems of the tilted stem sheet are abutted against or stuck into a wall surface of the groove portion of the cushion member, whereby the cover sheet is fixed to the cushion member.

The aforementioned configuration makes it possible to provide a high-quality seat with no or less likelihood that the double-sided tilted stem sheet inserted into the groove portion may be pulled out of the groove portion.

In the seat having the aforementioned configuration, preferably, loop-like engagement elements of a loop surface fastener attached to the back surface of the cover sheet may be engaged with the tilted stems in the tilted stem group (3) and in the tilted stem group (4), whereby the cover sheet is fixed to an inner portion surrounded by the base member of the tilted stem sheet.

The aforementioned configuration is advantageous in firmly fixing the cover sheet to the groove portion of the cushion member.

In the seat having the aforementioned configuration, preferably, loop-like engagement elements of a loop surface fastener attached to the back surface of the cover sheet may be engaged with the male engagement elements on a back surface of the tilted stem sheet, whereby the cover sheet is fixed to an inner portion surrounded by the base member of the tilted stem sheet.

The aforementioned configuration is advantageous in firmly fixing the cover sheet in the groove portion of the cushion member.

In the seat having the aforementioned configuration, preferably, loop-like engagement elements of a loop surface fastener attached to the back surface of the cover sheet may be engaged with the tilted stems in the tilted stem group (3) and in the tilted stem group (4), and with the male engagement elements, whereby the cover sheet is fixed to an inner portion surrounded by the base member of the tilted stem sheet.

The aforementioned configuration is advantageous in firmly fixing the cover sheet in the groove portion of the cushion member.

A seat according to still another aspect of the invention is a seat made of a seat cushion member covered with a cover sheet. The tilted stem sheet is attached to a back surface of the cover sheet in a pouched form, with the surface including the tilted stems facing outside. The tilted stem sheet in a pouched shape is inserted into a groove portion formed in the cushion member. The tilted stems of the tilted stem sheet are abutted against or stuck into a wall surface of the groove portion of the cushion member, whereby the cover sheet is fixed to the cushion member.

According to the aforementioned configuration, it is possible to provide a high-quality vehicle seat with no or less likelihood that the double-sided tilted stem sheet inserted into the groove portion may be pulled out of the groove portion.

### EXAMPLES

In the following, the present invention is described by way of examples. The present invention, however, is not limited by these examples. The pulling strengths in the examples are strengths obtained by measurement (hereinafter, called as Kuraray Fastening Method). Specifically, each tilted stem sheet was cut into a surface fastener of a size of 2.5 cm in width and 5 cm in length with the respective shapes of the examples and the comparative examples. Each tilted stem sheet was inserted into a groove of a cushion member made of cold foamed urethane and having a foaming density of 0.04 g/cm³, and the sheets were pulled out in a direction perpendicular to the plane at a pulling speed of 300 mm/min.

### Example 1

A molten resin composition containing polypropylene of 90 % by weight and polyolefin-based elastomer of 10 % by weight was melt-extruded in the form of a tape through a nozzle having a slit of substantially the same shape as illustrated in FIG. 1 (the number of ridges for tilted stems was different). The tape was immediately put into water and cooled to form a tape-like article having, on the front surface of a base layer, a plurality of ridges having a tilt angle of 45 degrees (θ illustrated in FIG. 1) with respect to the base layer and having a tilted stem section continuing in the tape length direction, and having, on the back surface of the base plate, a plurality of ridges having a tilted stem section as described above. The number of ridges for tilted stems was eight each on the front surface and on the back surface of the base layer.

Subsequently, the ridges for tilted stems present on the front surface of the tape-like article were notched at 1 mm-interval at a right angle with respect to the ridge length direction from the tip end of the ridge to the vicinity of the root portion of the ridge. The notched tape-like article was elongated by 2.2 times in the length direction. By the elongation, the notches in the ridges were extended, and the ridges turned into rows of multitudes of tilted stems independent of each other. The ends of stems in the stem row direction formed a flat plane.

After the elongation, the tape width was 25 mm. The thickness of the base layer was 1 mm. The height (H) of each tilted stem protruding from the base layer was 3 mm. The width (W) of each tilted stem in the element array direction was 1 mm. The sectional area of each tilted stem at an intermediate portion of the tilted stem in height was 1 mm². The distance between tilted stems was 1.2 mm. The density of tilted stems in a tilted stem group was 14 stems/cm². The thus obtained double-sided tilted stem sheet was such that the tilted stem group (1) was present on the front surface of the base layer, and the tilted stem group (2) was present on the back surface of the base layer. The double-sided tilted stem sheet satisfied the said requirements (A) to (D).

Subsequently, the double-sided tilted stem sheet was fixed to the back surface of a cover sheet obtained by attaching a thin foamed polyurethane sheet to the back surface of knitted fabric and by forming the sheet into the shape of an automobile seat by stitching in such a manner that one end of the base layer, corresponding to the tip ends of the tilted stems in the tilted direction of the tilted stems, was fixed by stitching, whereas the other end of the base layer was mounted on the back surface of the cover sheet as a free end.

Meanwhile, a seat cushion member having a groove portion of 2 mm-width, which was deep enough to insert the double-sided tilted stem sheet straight into the depth of the groove portion was prepared at a position of the cushion member made of foamed polyurethane in the shape of an automobile seat, corresponding to the position of the double-sided tilted stem sheet attached to the cover sheet (the groove portion was formed by fixing a metal plate in a die when the cushion member was formed). The seat cushion member was covered with the cover sheet, and the double-sided tilted stem sheet attached to the back surface of the cover sheet was inserted straight into the groove portion formed in the cushion member. The insertion was carried out substantially with no resistance.

Manufacturing the aforementioned cushion member made of foamed polyurethane was requested to a cushion member manufacturer. The manufacturer commented that, unlike a case, in which a cushion member was manufactured by setting a conventional mold-in fastener in a die, they could manufacture the cushion member without cumbersome operation in a very short time, without worrying about intrusion of a foamable polyurethane liquid to an engagement element surface of a fastener.

The obtained automobile seat was such that the cover sheet was fixed to the outer surface of the cushion member. It was difficult to pull out the cover sheet from the cushion member. The cover sheet was forcibly pulled out, and the pulling strength was measured at the time of pulling. As a result of the measurement, the pulling strength was 2.7 kg/cm. Thus, it is presumed that the tip ends of stems are stuck into or abutted against the inner wall surface of the groove portion formed in the seat cushion member.

### Comparative Example 1

A sheet including stems on both surfaces thereof was prepared in the same manner as Example 1 except that the stems stood upright on the base layer (θ=90 degrees) in Example 1. As well as Example 1, the sheet was attached to the back surface of the cover sheet for an automobile seat, and was inserted into the groove portion of the cushion member. The insertion was extremely difficult, and it was impossible to insert the sheet uniformly to the depth of the groove portion. Further, the inserted sheet was easily pulled out of the groove portion by applying a pulling force. The function of fixing the cover sheet to the outer surface of the cushion member was hardly exhibited.

### Example 2

A molten resin composition containing polypropylene of 90 % by weight and polyolefin-based elastomer of 10 % by weight was melt-extruded in the form of a tape through a nozzle having a slit of substantially the same shape as illustrated in FIG. 4 (the number of ridges for tilted stems was different). The tape was immediately put into water and cooled to form a tape-like article having, on the front surface of a base layer, a plurality of ridges tilted to be away from the middle portion of the tape in the tape width direction, having a tilt angle of 45 degrees (θ illustrated in FIG. 4) with respect to the base layer, and having a tilted stem section continuing in the tape length direction. The number of ridges was six each on the right side and on the left side in the tape length direction.

Subsequently, the ridges for tilted stems present on the front surface of the tape-like article were notched at 1 mm-interval at a right angle with respect to the ridge length direction from the tip end of the ridge to the vicinity of the root portion of the ridge. The notched tape-like article was elongated by 2.2 times in the length direction. By the elongation, the notches in the ridges were extended, and the ridges turned into rows of multitudes of tilted stems independent of each other. The ends of stems in the stem row direction formed a flat plane.

After the elongation, the tape width was 40 mm. The thickness of the base member was 1.0 mm. The height (H) of each tilted stem protruding from the base member was 3.0 mm. The width (W) of each tilted stem in the element array direction was 1.0 mm. The sectional area of each tilted stem at an intermediate portion of each tilted stem in height was 1.0 mm². The distance (S) between tilted stems was 1.2 mm. The density of tilted stems in a tilted stem group was 14 stems/cm². The thus obtained tilted stem sheet was such that the tilted stem group (1) was present on the left side on the front surface of the base member, and the tilted stem group (2) was present on the right side on the front surface of the base member, as illustrated in FIG. 4.

Subsequently, the tilted stem sheet was folded into a pouched shape along a portion of the base member that was easily foldable so that the surface including tilted stems faces outside (the portion of the base member was formed to have a small thickness so that the portion was easily foldable). The thus obtained tilted stem sheet satisfied the aforementioned requirements (A) to (D).

Subsequently, the tilted stem sheet was fixed to the back surface of a cover sheet obtained by attaching a thin foamed polyurethane sheet to the back surface of knitted fabric (cover sheet) and by forming the sheet into the shape of an automobile seat by stitching as illustrated in FIG. 9 in such a manner that both ends of the tilted stem sheet in the tilted direction of tilted stems were fixed to the back surface of the cover sheet, whereas the other end of the tilted stem sheet (a portion of the base member that was easily foldable) was mounted on the back surface of the cover sheet as a free end.

Meanwhile, a seat cushion member having a groove portion of 1.5 min-width, which was deep enough to insert the tilted stem sheet straight into the depth of the groove portion was prepared at a position of the cushion member made of foamed polyurethane in the shape of an automobile seat, corresponding to the position of the tilted stem sheet attached to the cover sheet (the groove portion was formed by fixing a metal plate in a die when the cushion member was formed). The seat cushion member was covered with the cover sheet, and the tilted stem sheet attached to the back surface of the cover sheet was inserted straight into the groove portion formed in the cushion member. The insertion was carried out substantially with no resistance.

Manufacturing the aforementioned cushion member made of foamed polyurethane was requested to a cushion member manufacturer. The manufacturer highly evaluated that unlike a case, in which a cushion member was manufactured by setting a conventional mold-in fastener in a die, they could manufacture the cushion member without cumbersome operation in a very short time, without worrying about intrusion of a foamable polyurethane liquid to an engagement element surface of a fastener.

The thus obtained automobile seat was such that the cover sheet was fixed to the outer surface of the cushion member. It was difficult to pull out the cover sheet from the cushion member. The cover sheet was forcibly pulled out, and the pulling strength was measured at the time of pulling. As a result of the measurement, the pulling strength was 2.8 kg/cm. Thus, it is presumed that the tip ends of stems are stuck into or abutted against the inner wall surface of the groove portion formed in the seat cushion member.

### Example 3

A tilted slit sheet including tilted slits on both surfaces thereof as illustrated in FIG. 5 was prepared, with use of a nozzle having a slit shape as illustrated in FIG. 5 for use in melt extrusion in Example 2.

The tilted stem sheet including six rows of tilted stems each on the right side and on the left side on each of the front surface and the back surface in the sheet length direction was formed. Specifically, the tilted stem sheet of Example 3 is the same as the tilted stem sheet of Example 2 except that the tilted stem sheet of Example 3 includes tilted stems also on the back surface.

Subsequently, the double-sided tilted stem sheet was folded into a pouched shape along a portion of the base member that was easily foldable so that the front surface including tilted stems faces outside (the portion of the base member was formed to have a small thickness so that the portion was easily foldable). The thus obtained tilted stem sheet satisfied the aforementioned requirements (A) to (G).

Subsequently, a loop surface fastener (a magic tape (registered trademark) by Kuraray Fastening Co., Ltd.) was attached to the back surface of a cover sheet obtained by attaching a thin foamed polyurethane sheet to the back surface of knitted fabric and forming the sheet into the shape of an automobile seat by stitching as illustrated in FIG. 10 in such a manner as to enclose the stitched portion so that the surface including loop-like engagement elements faces outside. Subsequently, the double-sided tilted stem sheet was covered in such a manner as to enclose the loop surface fastener. Subsequently, the tilted stem sheet was inserted into the groove portion of the cushion member in a state that the folded portion of the tilted stem sheet serves as the leading end, as illustrated in FIG. 10. The cushion member used in Example 3 was prepared by the same method as Example 2.

The thus obtained automobile seat was such that the cover sheet was fixed to the outer surface of the cushion member. It was difficult to pull out the cover sheet from the cushion member. The cover sheet was forcibly pulled out, and the pulling strength was measured at the time of pulling. As a result of the measurement, the pulling strength was 3.1 kg/cm. Thus, it is presumed that the tip ends of stems are stuck into or abutted against the inner wall surface of the groove portion formed in the seat cushion member. As compared with Example 2, Example 3 is advantageous in the points that it is easy to fix the tilted stem sheet to the back surface of the cover sheet, and there is no need of fixing the tilted stem sheet to the cover sheet by stitching. Therefore, the tilted stem sheet of Example 3 is less likely to be torn, as compared with Example 2. Further, easiness in manufacturing a cushion member was as good as Example 2.

### Example 4

A tilted stem sheet including arrowhead-shaped engagement elements of 3.0 mm-height as illustrated in FIG. 6 with a density of 30 elements/cm² at the middle portion on the back surface of the tilted stem sheet was prepared. The manufacturing method was the same as Example 2, in which extrusion molding was carried out through a nozzle having the slit as illustrated in FIG. 6, notches were formed in ridges for tilted stems on the front surface and in ridges for arrowhead-shaped engagement elements on the back surface in the same manner as Example 2, followed by elongation.

The tilted stem sheet was covered on a loop surface fastener attached to the back surface of the cover sheet prepared in Example 3 in such a manner that the loop-like engagement elements were engaged with the arrowhead-shaped engagement elements as illustrated in FIG. 11 so that the surface including tilted stems of the tilted stem sheet faces outside. Subsequently, the cover sheet was covered on an automobile seat cushion member. The tilted stem sheet attached to the back surface of the cover sheet was inserted into the groove portion formed in the cushion member. The width of the groove portion was 5 mm. The insertion was carried out substantially with no resistance.

The thus obtained automobile seat was configured such that the cover sheet was fixed to the outer surface of the cushion member. It was difficult to pull out the cover sheet from the cushion member. The cover sheet was forcibly pulled out, and the pulling strength was measured at the time of pulling. As a result of the measurement, the pulling strength was 3.2 kg/cm.

The tilted stem sheet of Example 4 is advantageous, as compared with Example 2 in the points that it is easy to fix the tilted stem sheet to the back surface of the cover sheet, there is no need of fixing the tilted stem sheet to the cover sheet by stitching, and the tilted stem sheet attached to the back surface of the cover sheet is fixed by the arrowhead-shaped engagement elements. Thus, Example 4 provides enhanced workability in fixing the tilted stem sheet to the cushion member. In addition, the tilted stem sheet of Example 4 is less likely to be torn, as compared with Example 2. Example 4 was highly evaluated by the operators, as compared with Example 3. Further, easiness in manufacturing a cushion member was as good as Example 2.

### Example 5

A double-sided tilted stem sheet including arrowhead-shaped engagement elements of 1.8 mm-height as illustrated in FIG. 7 with a density of 30 elements/cm² at the middle portion on the back surface of the double-sided tilted stem sheet was prepared. The manufacturing method was the same as Example 2, in which extrusion molding was carried out through a nozzle having the slit as illustrated in FIG. 7, notches were formed in ridges for tilted stems on the front surface and in ridges for arrowhead-shaped engagement elements on the back surface in the same manner as Example 2, followed by elongation.

The double-sided tilted stem sheet was covered on a loop surface fastener attached to the back surface of the cover sheet prepared in Example 4 so that the surface including anowhead-shaped engagement elements faces inside in such a manner that the loop-like engagement elements were engaged with the anowhead-shaped engagement elements as illustrated in FIG. 11, and the tilted stems on the back surface of the tilted stem sheet were engaged with the loop-like engagement elements of the loop surface fastener. Subsequently, the cover sheet was covered on an automobile seat cushion member. The tilted stem sheet attached to the back surface of the cover sheet was inserted into the groove portion formed in the cushion member. The width of the groove portion was 4 mm. The insertion was carried out substantially with no resistance.

The thus obtained automobile seat was configured such that the cover sheet was fixed to the outer surface of the cushion member. It was difficult to pull out the cover sheet from the cushion member. The cover sheet was forcibly pulled out, and the pulling strength was measured at the time of pulling. As a result of the measurement, the pulling strength was 3.6 kg/cm, which was higher than the value of Example 4.

The double-sided tilted stem sheet of Example 5 is advantageous, as compared with Example 2, in the points that it is easy to fix the double-sided tilted stem sheet to the back surface of the cover sheet, there is no need of fixing the double-sided tilted stem sheet to the cover sheet by stitching, and the tilted stem sheet attached to the back surface of the cover sheet is fixed by the arrowhead-shaped engagement elements and by the tilted stems on the back surface. Thus, Example 5 provides enhanced workability in fixing the double-sided tilted stem sheet to the cushion member. In addition, the double-sided tilted stem sheet of Example 5 is less likely to be torn, as compared with Example 2, because there is no need of stitching in Example 5. Thus, Example 5 was highly evaluated by the operators, as compared with Example 3. Further, in Example 5, the cover sheet was less likely to be pulled out of the cushion member, as compared with Example 4. Furthermore, easiness in manufacturing a cushion member was as good as Example 2.

### Comparative Example 2

A sheet including stems on both surfaces thereof was prepared in the same manner as Example 2 except that the stems stood upright on the base member (θ=90 degrees) in Example 2. As well as Example 2, the sheet was attached to the back surface of the cover sheet for an automobile seat, and was inserted into the groove portion of the cushion member. The insertion was extremely difficult, and it was impossible to insert the sheet uniformly to the depth of the groove portion. Further, the inserted sheet was easily pulled out of the groove portion by applying a pulling force. The function of fixing the cover sheet to the outer surface of the cushion member was hardly exhibited.

The present application is based on Japanese Patent Application No. 2013-066580 and Japanese Patent Application No. 2013-066581 both of which have been filed on March 27, 2013, the contents of which are hereby incorporated by reference.

Although the present invention has been appropriately and fully described by way of the embodiments, it is to be understood that various changes and/or modifications of the embodiments will be apparent to those skilled in the art. Therefore, unless otherwise such changes or modifications to be carried out by those skilled in the art depart from the scope of the present invention hereinafter defined, they should be construed as being included therein.

### INDUSTRIAL APPLICABILITY

The present invention has a wide industrial applicability in the technical field pertaining to a sheet for use in fixing a cover sheet to be used in a variety of types of seats, a manufacturing method of the sheet, and seats for a variety of types of vehicles.

## Claims

1. A sheet provided with a tilted stem group (1) present on a front surface of a base layer and a tilted stem group (2) present on a back surface of the base layer, wherein
both of tilted stems present in the tilted stem group (1) and in the tilted stem group (2) are such that:
multitudes of the tilted stems are formed close together;
the tilted stems protrude in a direction tilted with respect to a vertical direction;
the tilted stems protrude in one direction from the surface of the base layer; and
the tilted stems are tilted in directions symmetrical across the base layer.

2. The sheet according to Claim 1, wherein
the base layer is constituted of one layer.

3. The sheet according to Claim 2, wherein
the stems are aligned in rows in a direction intersecting the tilted direction of stems, and
ends of the stems in the stem row direction have planer shape.

4. The sheet according to Claim 2 or 3, wherein
the sheet having the tilted stems on both surfaces thereof is made of thermoplastic resin, and
whereas the base layer is elongated, the stems are kept substantially non-elongated.

5. A seat made of a seat cushion member covered with a cover sheet, wherein
the sheet having the tilted stems on both surfaces thereof is inserted into a groove portion formed in the seat cushion member in such a manner that an end of the base layer, corresponding to tip ends of the tilted stems in the tilted direction of the tilted stems of the sheet of any one of Claims 1 to 4, is fixed to a back surface of the cover sheet, whereas the other end of the base layer is mounted on the back surface of the cover sheet as a free end, and in such a manner that the tip ends of the tilted stems are stuck into or abutted against an inner wall surface of the groove portion.

6. The seat according to Claim 5, wherein
a width of the groove portion is 3 mm or smaller before the sheet having the tilted stems on both surfaces thereof is inserted.

7. The seat according to Claim 5, wherein
a concavo-convex portion that corresponds stem rows of the sheet having the tilted stems on both surfaces thereof is formed on an inner wall of the groove portion.

8. The seat according to Claim 5, wherein
a material capable of increasing a frictional resistance with respect to the sheet having the tilted stems on both surfaces thereof is added to an inner wall of the groove portion.

9. The seat according to Claim 5, wherein
an inner wall of the groove portion is covered with hard foamed resin.

10. The seat according to Claim 5, wherein
a loop surface fastener is attached to an inner wall of the groove portion.

11. The sheet according to Claim 1, wherein
the sheet provided with the tilted stem group (1) present on one side on a front surface of a base member with respect to a middle portion of the base member, and the tilted stem group (2) present on the other side on the front surface of the base member is formed by folding the sheet along the middle portion of the base member.

12. The sheet according to Claim 11, wherein
both of the stems present in the tilted stem group (1) and the stems present in the tilted stem group (2) are tilted in a direction to be away from the middle portion of the base member.

13. The tilted stem sheet according to Claim 11 or Claim 12, wherein
a portion of the base member that is easily foldable is formed between the tilted stem group (1) and the tilted stem group (2).

14. The sheet according to Claim 11, wherein
a tilted stem group (3) is present on one side on a back surface of the base member with respect to the middle portion of the base member, and a tilted stem group (4) is present on the other side on the back surface of the base member, and
both of the tilted stem group (3) and the tilted stem group (4) are such that:
multitudes of the tilted stems are formed close together, and protrude from the back surface of the base member while being tilted in one direction; and
both of the stems present in the tilted stem group (3) and the stems present in the tilted stem group (4) are tilted in a direction toward the middle portion of the base member.

15. The tilted stem sheet according to any one of Claims 11 to 14, wherein
male engagement elements engageable with loop-like engagement elements are present on a back surface of the base member.

16. The tilted stem sheet according to Claim 14, wherein
multitudes of male engagement elements are present between the tilted stem group (3) and the tilted stem group (4).

17. A seat made of a seat cushion member covered with a cover sheet, wherein
both ends of the tilted stem sheet of Claim 11 are fixed to a back surface of the cover sheet in such a manner that an outer surface of the tilted stem sheet faces outside,
the tilted stem sheet is inserted into a groove portion formed in the cushion member in such a manner that the outer surface of the tilted stem sheet comes into contact with an inner wall of the groove portion, and
the tilted stems of the tilted stem sheet are abutted against or stuck into a wall surface of the groove portion of the cushion member, whereby the cover sheet is fixed to the cushion member.

18. The seat according to Claim 17, wherein
loop-like engagement elements of a loop surface fastener attached to the back surface of the cover sheet are engaged with the tilted stems in the tilted stem group (3) and in the tilted stem group (4) of Claim 14, whereby the cover sheet is fixed to an inner portion surrounded by the base member of the tilted stem sheet.

19. The seat according to Claim 17, wherein
loop-like engagement elements of a loop surface fastener attached to the back surface of the cover sheet are engaged with the male engagement elements on a back surface of the tilted stem sheet of Claim 15, whereby the cover sheet is fixed to an inner portion surrounded by the base member of the tilted stem sheet.

20. The seat according to Claim 17, wherein
loop-like engagement elements of a loop surface fastener attached to the back surface of the cover sheet are engaged with the tilted stems in the tilted stem group (3) and in the tilted stem group (4) of Claim 16, and with the male engagement elements, whereby the cover sheet is fixed to an inner portion surrounded by the base member of the tilted stem sheet.

21. A seat made of a seat cushion member covered with a cover sheet, wherein
the tilted stem sheet of Claim 11 is attached to a back surface of the cover sheet in a pouched form, with the surface including the tilted stems facing outside,
the tilted stem sheet in a pouched shape is inserted into a groove portion formed in the cushion member, and
the tilted stems of the tilted stem sheet are abutted against or stuck into a wall surface of the groove portion of the cushion member, whereby the cover sheet is fixed to the cushion member.
